# EUROPEAN PATENT APPLICATION

(11) **EP 1 521 485 A1**
(43) Date of publication of application: **06.04.2005**
(21) Application number: 03292415.1
(22) Date of filing: 01.10.2003
(51) Int. Cl.: H04Q 3/00, H04M 15/28

(54) **Transmitting a notification to a calling subscriber during call setup to a subscriber who has been ported to another network**

(71) Applicant: Hewlett-Packard Development Company, L.P., Houston, TX 77070 (US)
(72) Inventor: Wieczorek, Philipe, Saint Ismier, 38330 (FR); Kyriakides, Lionel, Brignoud, 38190 (FR)
(74) Representative: Lloyd, Richard Graham

(57) **Abstract**

The invention relates to a method for setting up a call between a first and a second device in a telecommunications network supporting number portability. The method provides a calling subscriber with an indication that a called subscriber has been ported to another network and allows the calling subscriber to give instructions as to whether he wishes the call to proceed. The invention in particular enables the calling subscriber to be informed about a change in call tariff.

## Description

### Field of the Invention

The present invention relates to a communication system and method and, more particularly, to number portability within such a communication system and method.

### Background to the Invention

In order to increase competition between service providers and network operators for the custom of telephony subscribers, the concept of number portability has been introduced. Within a mobile context, Mobile Number Portability (MNP) is the ability for a mobile subscriber to change digital mobile subscription networks or operators within the same country whilst retaining their original directory number (DN). It will be appreciated by those skilled in the art that there are, within North America, additional regulatory constraints. Therefore, number portability, again, within a mobile context, within North America, which is known as North American GSM Number Portability (NAGPN), is the ability for a subscriber to change subscription between North American GSM networks and other subscription networks within a FCC regulated geographical area. For the sake of clarity, references to MNP should be taken as including references to NAGNP, where the context permits.

Using mobile number portability, a mobile subscriber keeps their mobile station ISDN number (MSISDN) so that their friends and colleagues can still use the same number to contact that mobile subscriber even though that mobile subscriber's telephony services are no longer provided by their original network, that is, their donor network, and those services are currently provided by their new subscription network. Mobile number portability is also intended to be effective in situations where the donor network and the subscription network do not correspond to the number range owner or holder network to which the MSISDN was originally assigned.

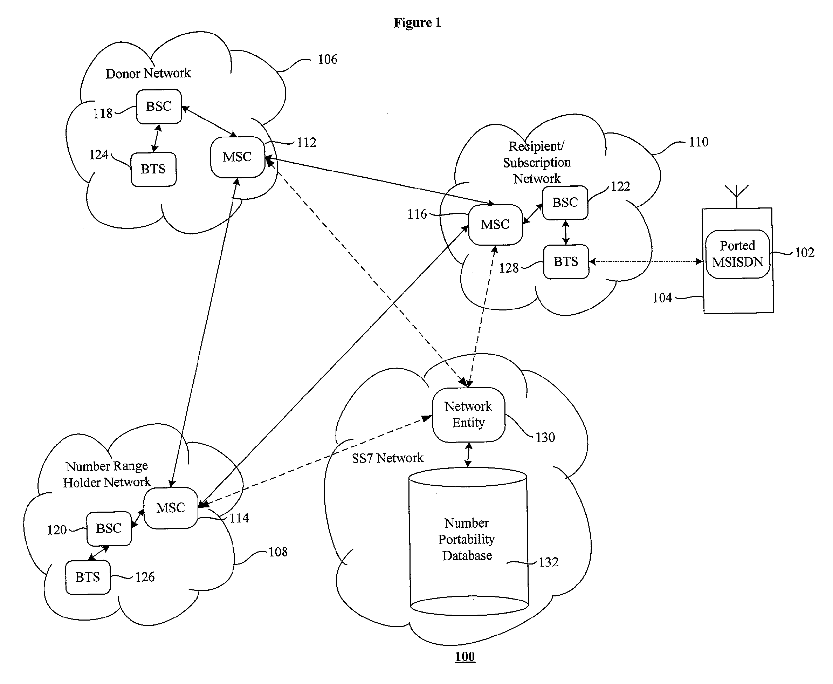

Referring to figure 1, there is shown a communication arrangement 100 that schematically illustrates mobile number porting for a ported MSISDN 102 corresponding to a mobile station 104 of a ported subscriber (not shown). It will be appreciated that the communication arrangement 100 comprises a donor network 106, which is the subscription network from which a number is ported in a porting process. This may or may not be the number range holder network. The arrangement 100 also comprises a number range owner or holder network 108, which is the network to which a number range containing the ported number 102 was allocated, and a recipient or subscription network 110, that is, the network with which a customer's service provider has a contract to implement a customer's services for a specific MSISDN such as the ported M SISDN 102. It will be appreciated by those skilled in the art that the term *"recipient network",* within a mobile context, is used during the porting process. The *"recipient network*" becomes the *"subscription network*" after completion of the porting process.

It can be seen that each of the networks 106, 108 and 110 have respective Mobile service Switching Centres (MSCs) 112, 114 and 116. As is conventional, each of the MSCs 112, 114 and 116 has respective BSCs 118, 120 and 122, which, in turn, have at least one respective base transceiver station (BTS) 124, 126 and 128. It will be appreciated that, in practice, each MSC 112, 114 and 116 will have many respective BSCs. Similarly, each BSC would typically have many BTSs.

The communication arrangement 100 also comprises a network entity 130 that is responsible for managing a number p ortability database (NPDB) 132. The network entity 130 might comprise, for example, a signalling relay function that is commonly accessible to the MSCs or at least some of them as is known within the art. Alternatively, each MSC 112, 114 and 116 might have access to a local number portability data base.

The porting process involves various administrative actions that are performed by the GSM network operators, that is, the operators of the number range holder network 108, the donor network 106, and the recipient network 110 and, as an option, by operators of other national GSM networks. These administrative actions vary with the function of the number range holder network in the porting process as follows:
(a) if the number range holder network 108 is identical to the donor network 106:
   recipient network:
      adds an appropriate entry in the HLR;
      adds an entry in the number portability database;
   donor network:
      adds an entry in the number portability database;
      deletes the entry related to the ported MSISDNs in the HLR;
   other networks in the portability domain:
      add an entry in the number portability to database (if direct routing is used);
(b) if the number range owner network 108 is identical to the recipient network;
   recipient network:
      adds an entry in the HLR;
      deletes an entry related to the ported MSISDN in the number portability database;
   donor network:
      deletes any entry related to the ported MSISDN in the number portability database;
      deletes the entry related to the ported MSISDNs in the HLR;
   other networks in the portability domain:
      delete any entry related to the ported MSISDN in the number portability database;
(c) if t he n umber r ange holder n etwork 108 is different to both the recipient 110 and t he donor 106 networks;
   recipient network:
      adds an entry in the HLR;
      adds an entry in the number portability database;
   number range holder network:
      updates the number portability database;
   donor network:
      deletes (or updates) the entry in the number portability database;
      deletes the entry related to the ported MSISDNs in the HLR; and
   other networks in the portability domain;
      update the number portability database (if an entry for the ported MSISDN
      exists).

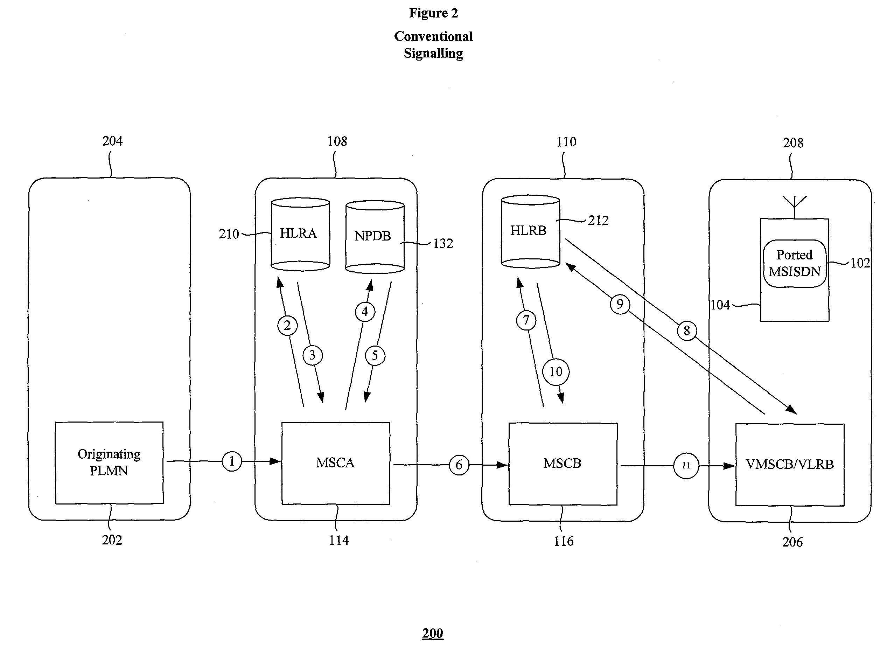

Referring to figure 2, there is shown a conventional message or signalling architecture 200 between an exchange 202 of an international or national originating network 204, the MSC (MSCA) 114 of a number range holder network 108, the MSC (MSCB) 116 of the subscription network 110 and, in the general case, a VMSCB/VLRB 206 of a visited network 208, if appropriate. The architecture 200 shown in figure 2 is used when the originating network 204 has no knowledge of whether the MSISDN is ported or not and uses traditional routing to route calls to the number range holder network 108 for routing assistance. The signalling is as follows:
1. a request for a call set-up to an MSISDN is received from an originating exchange or PLMN. The call is routed to the MSCA 114 of the number range holder network 108;
2. when the MSCA 114 receives the ISUP IAM (not shown), it requests routing information by submitting a MAP SRI request to the HLRA 210 ensuring that the MSISDN is included in the request;
3. the HLRA 210 returns a MAC SRI acknowledge with an "*Unknown Subscriber*" error since no record will have been found for the MSISDN in the HLRA 210 when the MSISDN has been ported;
4. when the MSCA 114 receives the error indication from the HLRA 210, the MSCA 114 sends a database query to the NPDB 132, including the MSISDN in the query, via the network entity 130;
5. the NPDB 132 determines that the MSISDN is ported and responds to the MSCA 114 with a routing number directing the MSCA 114 to the MSCB 116 of the subscription network 110;
6. the call is routed to the MSCB 116 of the subscription network 110 using an ISPU IMA message (not shown) containing the routing number as well as the MSISDN;
7. the MSCB 116 requests routing information from its HLR (HLRB) 212 by submitting a MAP SRI request that includes the MSISDN;
8. in the general case, which accommodates roaming, the HLRB 212 requests an MSRN from a VMSCB/VLRB 206 of the visited network 208, where the mobile subscriber is currently registered;
9. the VMSCB/VLRB returns an MSRN to the HLRB 212;
10. the HLRB 212 responds to the MSCB 116 by sending an RSI acknowledge message with the MSRN; and
11. the MSCB 210 uses the MSRN to route the call to the VMSCB 206 and ultimately to the mobile station 104 having the ported number 102.

While it can be appreciated that call routing for ported MSISDNs can be achieved, the prior art does not address problems associated with call charges or tariffs when calls are routed to a ported MSISDN. It will be appreciated by those skilled in the art that m any service providers or network operators offer various call tariffs. For example, a call to another mobile station within the same network might attract a lower tariff than a call placed to a mobile station that is associated with, or subscribes to, a different network even though, from the perspective of the calling subscriber, the MSISDN of the called mobile station gives the misleading impression of still being associated with a different network, that is, the donor or number range owner network, rather than the potentially more expensive recipient or subscription network.

Although the above problem and prior art have been described with reference to number portability within a mobile context, it will be appreciated by those skilled in the art that substantially similar problems are applicable also to number portability within a fixed-line o land-line network context as well a s to a combination of a mobile a nd a land-line network.

It is an object of embodiments of the present invention at least to mitigate some of the problems of the prior art.

### Summary of Invention

Accordingly, a first aspect of embodiments of the present invention provides a communication method comprising the steps of initiating a call to a first device, associated with a first communication network, operator or service provider, from a second device, associated with a second communication network, operator or service provider; determining that data associated with the first device has been ported to the first communication network from a different communication network; generating data, associated with the determining, to cause the second device to generate an output associated with the determining; and generating the output in response to receiving the data.

Advantageously, a calling subscriber can terminate a call in advance of incurring call charges associated with routing the call to a ported MSISDN or allow the call to proceed in the knowledge that the number has been ported.

Embodiments provide a communication method in which the step of generating the output in response to receiving the generated data comprises the step of generating at least one of an audible or visual output. Preferably, the step of generating the at least one of an audible or visual output comprises generating at least one of an associated tone pattern, output of data representing a voice message or output of data representing a visual message.

Embodiments provide a communication method further comprising the step of determining whether or not the porting of the data associated with the first device has an associated event and generating data associated with the event if the porting of the data has an associated event.

Preferred embodiments provide a communication method in which the step of determining whether or n ot the porting of the d ata a ssociated w ith t he first d evice h as a n associated event comprises the step of determining whether or not the porting of the data comprises a change in a call tariff associated with the call to the first device. Preferably, the step of determining whether or not the porting of the data comprises a change in call tariff associated with the call to the first device comprises the step of determining that the change in call tariff is acceptable to a subscriber associated with the second device.

Preferred embodiments provide a communication method in which the step of determining that the change in call tariff is acceptable to the subscriber associated with the second device comprises the step of outputting data representing a message to indicate whether or not the change in call tariff is acceptable to the subscriber of the second device. Preferably, the step of determining that the change in call tariff is acceptable to the subscriber associated with the second device comprises the step of performing a calculation or comparison to determine if the change in call tariff is acceptable or unacceptable to the subscriber.

A second aspect of embodiments of the present invention provides a communication method associated with first and second communication devices; the method comprising the steps of initiating a call to the first communication device from the second communication device; detecting an event associated with a potential change in call tariff associated with the call; and outputting a message associated with detecting the event.

A third aspect of embodiments of the present invention provides a mobile communication method comprising the steps of initiating a call to a first mobile device, associated with at least one of a first communication network, operator or service provider, from a second mobile device, associated with at least one of a second communication network, operator or service provider; determining that an MSISDN associated with the first device has been ported to the first communication network, operator or service provider; generating a message comprising data, associated with the determining, to cause the second device to generate an output associated with porting of the MSISDN; and generating the output in response to receiving the generated message.

A further aspect of embodiments of the present invention provides a communication method comprising the steps of initiating a call from a first communication device to a second communication device; detecting a predeterminable, or change in, call tariff associated with the call; and determining whether or not to continue with the call in response to the call-tariff.

A still further aspect of embodiments of the present invention provides communication system comprising means to initiate a call from a first communication device to a second communication device; means to detect a predeterminable, or a change in, call tariff associated with the call; and means to determine whether or not the call should be allowed to proceed in response to the detected call tariff.

A fifth aspect of embodiments of the p resent invention provides a communication method to initiate a communication between a first device and a second device; the method comprising the steps of receiving, from the second communication device, identification data associated with initiating the communication to the first communication device; detecting that the identification data associated with the first communication device is ported identification data; and determining whether or not the communication should proceed in response to said detecting.

Embodiments provide a communication method in which the step of determining comprises the step of determining, in response to detecting that the identification data is ported identification data, that the communication has an associated call tariff. Preferably, there is provided a step of outputting data associated with the call tariff and, more preferably, the step of outputting data associated with the call tariff comprises the step of outputting data representing at least one of a tone or tone sequence.

Embodiments provide a communication method in which the step of outputting data associated with the call tariff comprises the step of outputting data representing a voice message associated with the call tariff.

Preferred embodiments provide a communication method further comprising the step of outputting data representing a voice message associated with the ported identification data in response to detecting that the identification data is ported identification data. Preferably, the data representing the voice message comprises data representing an invitation to indicate whether or not the communication should proceed.

Embodiments provide a communication method in which the step of determining whether or not the communication should proceed comprises the step of determining whether or not there are any adverse consequences in allowing the communication to proceed. Preferably, the step of determining whether there are any adverse consequences in allowing the communication to proceed comprises determining whether or not there are any adverse financial consequences in allowing the communication to proceed.

Embodiments are provided that allow the communication to proceed in response to determining that the communication should be allowed to proceed. Additionally, embodiments are arranged to prevent the communication proceeding in response to determining that the communication should not be allowed to proceed.

Preferably, at least one of the first and second communication devices is a mobile telephone, wireless communication device or a fixed-line device.

Embodiments of the present invention can be realised in, or as part of, an MSC, BSC, BTS, GMSC, SCP, CSE or IVR unit.

A yet further aspect of embodiments of the present invention provides a communication system comprising means to initiate a call to a first device, associated with a first communication network, operator or service provider, from a second device, associated with a second communication network, operator or service provider; means to determine that data associated with the first device has been ported to the first communication network from a different communication network; generating data, associated with the determining, to cause the second device to generate an output associated with the determining; and means to generate the output in response to receiving the data.

Embodiments provide a communication system in which the means to generate the output in response to receiving the generated data comprises means to generate at least one of an audible or visual output. Preferably, the means to generate the at least one of an audible or visual output comprises means to generate at least one of an associated tone pattern, output of data representing a voice message or output of data representing a visual message.

Embodiments provide a communication system further comprising means to determine whether or not the porting of the data associated with the first device has an associated event and means to generate data associated with the event if the porting of the data has an associated event.

Preferred embodiments provide a communication system in which the means to determine whether or not the porting of the data associated with the first device has an associated event comprises means to determine whether or not the porting of the data comprises a change in a call tariff associated with the call to the first device. Preferably, the means to determine whether or not the porting of the data comprises a change in call tariff associated with the call to the first device comprises means to determine that the change in call tariff is acceptable to a subscriber associated with the second device.

Preferred embodiments provide a communication system in which the means to determine that the change i n call tariff is acceptable to the subscriber a ssociated w ith the second device comprises means to output data representing a message to indicate whether or not the change in call tariff is acceptable to the subscriber of the second device. Preferably, the means to determine that the change in call tariff is acceptable to the subscriber associated with the second device comprises means to perform a calculation or comparison to determine if the change in call tariff is acceptable or unacceptable to the subscriber.

A further aspect of embodiments of the present invention provides a communication system associated with first and second communication devices; the system comprising means to initiate a call to the first communication device from the second communication device; means to detect an event associated with a potential change in call tariff associated with the call; and means to output a message associated with detecting the event.

A still further aspect of embodiments of the present invention provides a mobile communication system comprising means to initiate a call to a first mobile device, associated with at least one of a first communication network, operator or service provider, from a second mobile device, associated with at least one of a second communication network, operator or service provider; means to determine that an MSISDN associated with the first device has been ported to the first communication network, operator or service provider; means to generate a message comprising data, associated with the determining, to cause the second device to generate an output associated with porting of the MSISDN; and means to generate the output in response to receiving the generated message.

A further aspect of embodiments of the present invention provides a communication system comprising means to initiate a c all from a first communication device to a second communication device; means to detect a predeterminable, or change in, call tariff associated with the call; and means to determine whether or not to continue with the call in response to the call-tariff.

A still further aspect of embodiments of the present invention provides a communication system comprising means to initiate a call from a first communication device to a second communication device; means to detect a predeterminable, or a change in, call tariff associated with the call; and means to determine whether or not the call should be allowed to proceed in response to the detected call tariff.

A yet further aspect of embodiments of the present invention provides a communication system to initiate a communication between a first device and a second device; the system comprising means to receive, from the second communication device, identification data associated with initiating the communication to the first communication device; means to detect that the identification data associated with the first communication device is ported identification data; and means to determine whether or not the communication should proceed in response to said detecting.

Embodiments provide a communication system in which the means to determine comprises means to determine, in response to detecting that the identification data is ported identification data, that the communication has an associated call tariff. Preferably, there is provided means to output data associated with the call tariff and, more preferably, means to output data associated with the call tariff that comprises means to output data representing at least one of a tone or tone sequence.

Embodiments provide a communication system in which the means to output data associated with the call tariff comprises means to output data representing a voice message associated with the call tariff.

Preferred embodiments provide a communication system further comprising means to output data representing a voice message associated with the ported identification data in response to detecting that the identification data is ported identification data. Preferably, the data representing the voice message comprises data representing an invitation to indicate whether or not the communication should proceed.

Embodiments provide a communication system in which the means to determine whether or not the communication should proceed comprises means to determine whether or not there are any adverse consequences in allowing the communication to proceed. Preferably, the means to determine whether there are any adverse consequences in allowing the communication to proceed comprises means to determine whether or not there are any adverse financial consequences in allowing the communication to proceed.

It will be appreciated that embodiments can be realised using hardware, software or a combination of both. Suitably, embodiments provide a computer program comprising executable code to implement a system or method as described in this specification or claims with reference to the preferred embodiments and to a computer program product comprising storage storing such a computer program.

### Brief Description of the Drawings

Embodiments of the present invention will now be described, by way of example only, with reference to the accompanying drawings in which:
figure 1 shows a communication arrangement for supporting mobile number portability;
figure 2 shows conventional signalling or an architecture to support mobile number portability;
figure 3 illustrates a signalling architecture of an embodiment of the present invention;
figure 4 depicts a prior art signalling exchange for number portability;
figure 5 shows a signalling architecture for number portability according to an embodiment;
figure 6 shows a further signalling architecture for number portability according to a further embodiment;
figure 7 illustrates a communication arrangement according to an embodiment of the present invention;
figure 8 depicts a signalling architecture associated with the embodiment shown in figure 7;
figure 9 shows a further signalling architecture associated with the embodiment shown in figure 7; and
figure 10 illustrates an embodiment of the present invention that uses an IVR unit.

### Detailed Description of Preferred Embodiments

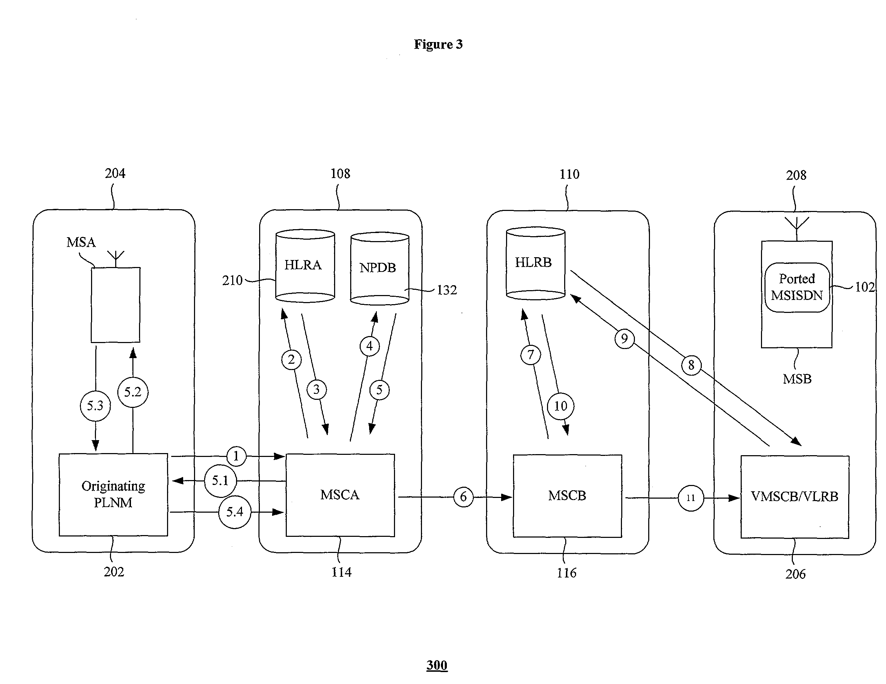

Figure 3 shows a schematic architecture 300 for an embodiment of the present invention. The signalling and message exchanges of the architecture 300 shown in figure 3 is substantially identical to that described above in relation to figure 2 but for the addition of points 5.1 to 5.4.

In response to the NPDB 132 detecting or providing an indication that the called MSISDN has been ported and responding, at step 5, to the MSCA 114 with an appropriate routing number directing the call to the MSCB 116 of the subscription network 110, the following actions are performed:

5.1 the MSCA 114 transmits a message comprising an indication that the called mobile station MSB has a ported MSISDN and that the MSCA 114 needs further instructions as to whether to route the call onwards or not;

5.2 forwards a message, or other indication, to the originating mobile station MSA containing an indication that the called MSISDN is a ported MSISDN and, preferably, requests the subscriber of the calling mobile station MSA to indicate whether or not they wish the call to proceed;

5.3 the subscriber, using the calling mobile station MSA, responds to step 5.2 by forwarding instructions to the originating exchange or PLMN 202; and

5.4 the originating PLMN 202 forwards the subscriber's instructions to the MSCA 114.

If the MSCA 114 determines that the call should be forwarded, processing and signalling continues from step 6 and is substantially identical to that described above in relation to figure 2. However, if the MSCA 114 determines that the call should not proceed, call processing is terminated by the MSCA 114 hanging up the call, which causes an ISUP Rel message to be issued.

It will be appreciated by those skilled in the art that queries to the NPDB 132 might be realised using a class 5 switch, together with associated INAP Initial_DP and INAP (IRN) signals, or using a signalling relay function together with appropriate MAP signalling as is well known within the art.

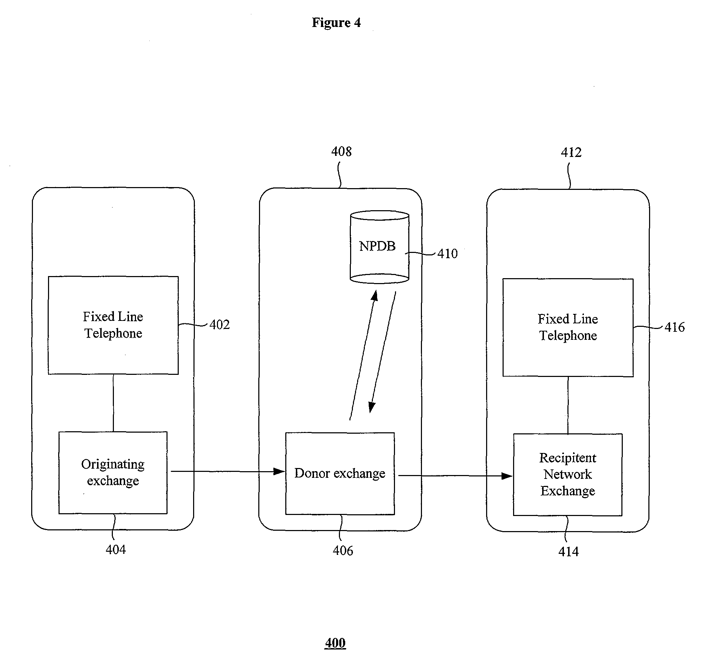

Referring to figure 4, there is shown the conventional signalling for fixed-line number portability that uses a call forwarding technique to route an originating call to a destination. A fixed line telephone 402 instigates the call via a class 5 switch (not shown) of an originating exchange 404. The originating exchange forwards, via an ISUP IAM message, a number to an exchange 406 of a donor network 408. The donor exchange 406 determines, from a number portability database 410 that the called number has been ported to a recipient or subscription network 412. Accordingly, the donor exchange 406 performs call forwarding signalling to forward the call to a class 5 switch 414 of the recipient network 412. The recipient network exchange 414, in turn, forwards the call to the appropriate called device 416.

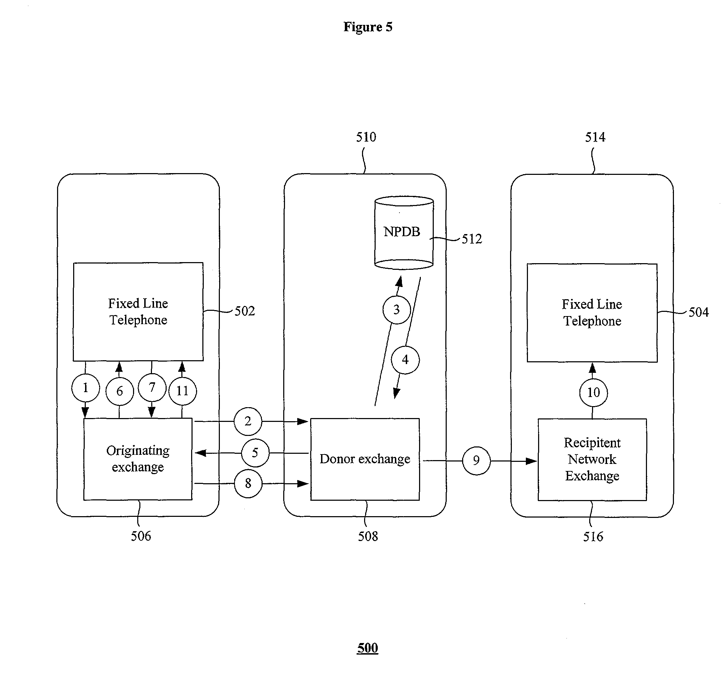

Referring to figure 5, there is shown an architecture 500 for line number portability according to an embodiment of the present invention. At step 1, the fixed line telephone 502 instigates a call to a destination telephone 504 via a local class 5 switch, that is, an originating exchange 506. The originating exchange 506 forwards, via an ISUP IAM message (not shown), the called number to the donor exchange 508 of the donor network 510 at point 2. The donor exchange 508 consults a number portability database 512 to determine whether the called number has been ported or not at point 3. If the number portability database 512 indicates, at point 4, that the called number has been ported to the recipient or subscription network 514, the donor exchange 508 generates an ISUP IAM message and forwards that ISUP IAM message to the originating exchange at point 5 containing an indication to that effect. The message carried at point 5 from the donor exchange 508, or signalling issued by the donor exchange at point 5, to the originating exchange, is used to provide an indication to the user of the fixed line telephone, at point 6, that the called number has been ported to another network and that further instructions as to whether or not the calls should be allowed to proceed should be provided. The user of the fixed telephone 502 indicates, at point 7, to the originating exchange 506 whether the call should continue or not. If the o riginating e xchange d etermines that t he c all sh ould b e continued, a n otification, at point 8, to that effect is forwarded to the donor exchange 508. In response to receiving the indication at point 8 that the call should be continued, the donor exchange 508 forwards, at point 9, the call to the recipient network exchange 516 of the recipient network 514. The recipient network exchange 516 forwards the call to the called fixed line telephone 504 at point 10 at which point the users of the telephones 502 and 504 can communicate.

However, if the instruction at point 7 to the originating exchange 506 is that the call should not be allowed to proceed, the originating exchange forwards, at point 8, a message to that effect to the donor exchange 508 where the call processing is terminated and the originating exchange generates an appropriate tone, at point 11, for output by the fixed line telephone 502 providing an indication that the call has been terminated.

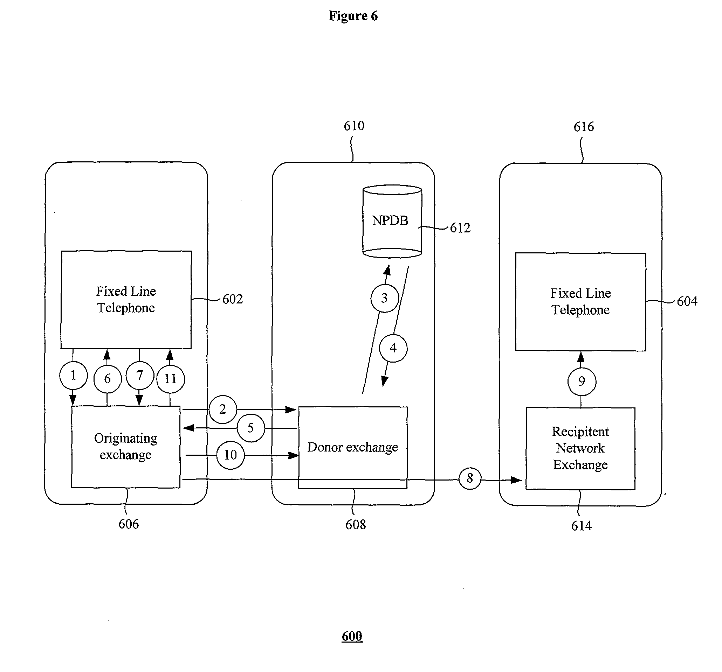

Referring to figure 6, there is shown a fixed line signalling architecture 600 for call drop back according to an embodiment. At point 1, a fixed line telephone 602 instigates a call to another fixed line telephone 604 via an originating exchange, that is, a class 5 switch 606. The originating exchange 606, at point 2, issues a TCAP query, comprising a called number, to donor exchange 608 of a donor network 610. In response to receiving the TCAP query, the donor exchange 608 queries a number portability database 602 to determine whether or not the called number has been ported. The number portability data base 602, at point 4, returns an indication to the donor exchange 608 of whether or not the called number has been ported together with corresponding contact data for the ported number, if appropriate. The donor exchange, at point 5, returns, via a TCAP response, an indication to the originating exchange 606 of whether the called number has been ported, together with the corresponding contact data, to allow the originating exchange 606 to continue to process the call if so instructed or if appropriate. The originating exchange 606, in response to receiving the indication that the called number has been ported, outputs an indication or message to that effect to the fixed line telephone. In response to receiving, at point 6, the indication that the called number has been ported to another network, the user of the fixed line telephone 602, at point 7, provides an indication to the originating exchange 606 as to whether or not the call should be allowed to continue. Assuming the call is to be allowed to continue, the originating exchange directly contacts a recipient network exchange 614 of the recipient network 616, t hat is, c all se t-up signalling is e xchanged between the originating exchange 606 and the recipient network exchange 614. The recipient network exchange 614, at point 9, forwards the call signalling to the called fixed line telephone 604 to establish a voice circuit between the fixed line telephone 602 and the called fixed line telephone 604.

However, if the indication forwarded from the calling fixed line telephone 602 to the originating exchange 606 at point 7 is that the call should be terminated, the originating exchange 606 is arranged to inform the donor exchange 608 of the call termination at point 10 and to output an indication to the fixed line telephone 602 that the call has been terminated at point 11.

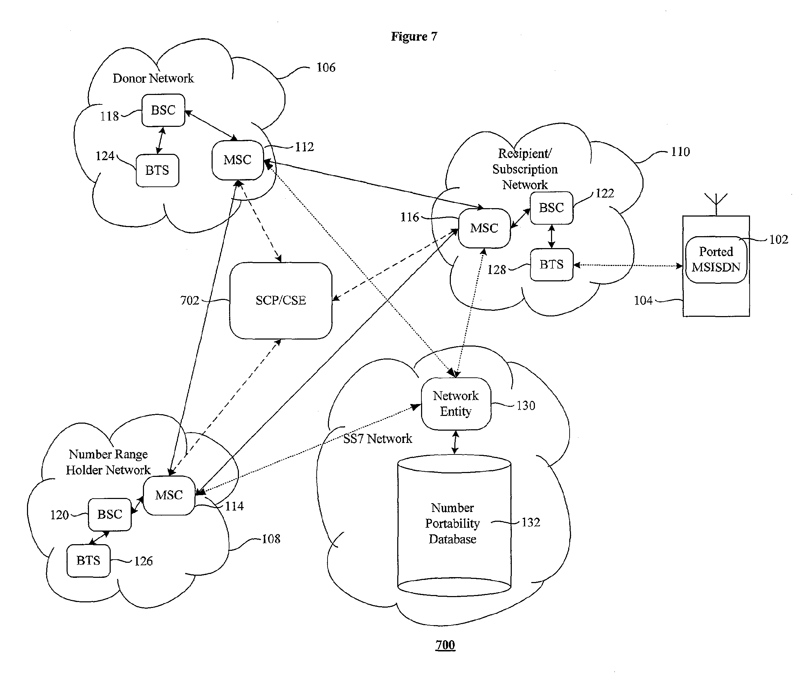

Figure 7 shows a communication arrangement 700 according to a further embodiment of the present invention. It will be appreciated that the arrangement 700 shown in figure 7 has much in common with figure 1 and like reference numerals refer to like features or elements. Therefore, for the sake of brevity, the common elements and features will not be described again. It can be appreciated that figure 7 comprises a further network element 702. The further network element 702 takes the form of a SCP or a CSE according to whether one is dealing with a fixed line communication network or a mobile communication network respectively. In the case of the further network element 702 being either a CSE or SCP, the CSE or SCP 702 is used to determine, on behalf of an originator of a call, whether that call should be allowed to proceed if the called MSISDN 102 has been ported to a recipient or subscription network 110.

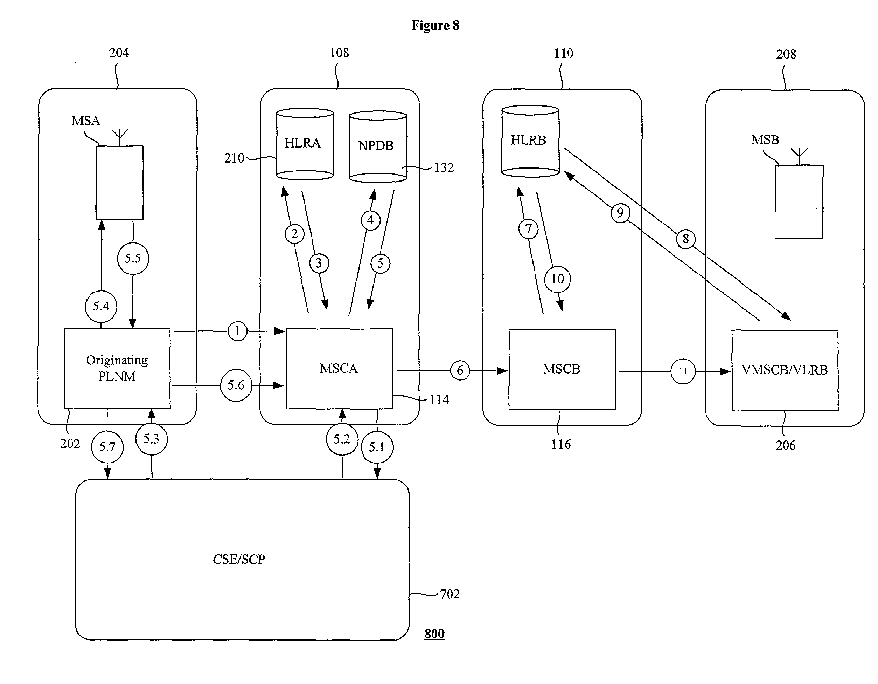

The signalling architecture 800 for the embodiment shown in figure 7 as shown in figure 8. It can be appreciated that the signalling architecture 8 00 shown in figure 8 has much in common with that shown in figure 3 and like reference numerals refer to like features and functions. Therefore, the description of any such common features or functions will not be repeated for the sake of brevity. It will be appreciated that a significant difference between the architecture 800 shown in figure 8 and the architecture 300 shown in figure 3 is that the former involves the CSE, in the case of a mobile network, or a SCP, in the case of a fixed line network. However, rather than the exchange of signalling between the MSCA 114 and the originating PLMN 202 under points 5.1 to 5.4 taking place as shown in the architecture 300 of figure 3, the MSCA 114, upon detecting that the called MSISDN has been ported to the recipient or subscription network 110, forwards an indication, at point 5.1, to that effect to the CSE or SCP 702.

On receiving the indication that the called MSISDN has been ported to the recipient or subscription network 110, the CSE or SCP 702 forwards an indication to that effect to the originating PLMN 202 at step 5.3. It will be appreciated by one skilled in the art that such as indication might be forwarded to the originating PLMN 202 via the MSCA 114 rather than that indication being forwarded directly to the originating PLMN 202.

Upon receiving such an indication at point 5.3, the originating PLMN 202 outputs an indication to the calling mobile station MSA, at step 5.4, that the number of the called mobile station MSB has been ported to another network and that further instructions as to whether or not the call should be allowed to proceed are required. The calling mobile st ation M SA provides an indication, at step 5.5, as to whether or not the call to the called mobile MSB should be allowed to continue. If the originating PLMN 202 determines that the call should be allowed to continue, an indication to that effect is sent at steps 5.6 and 5.7 to the MSCA 114 and the CSE or SCP 702 respectively. Upon receiving the indication that the call should be allowed to continue, the MSCA 114 continues the call processing from point 6. Furthermore, the CSE or SCP 702, upon receiving the indication that the call should be allowed to continue at 5.7 takes no further action in relation to the call set-up.

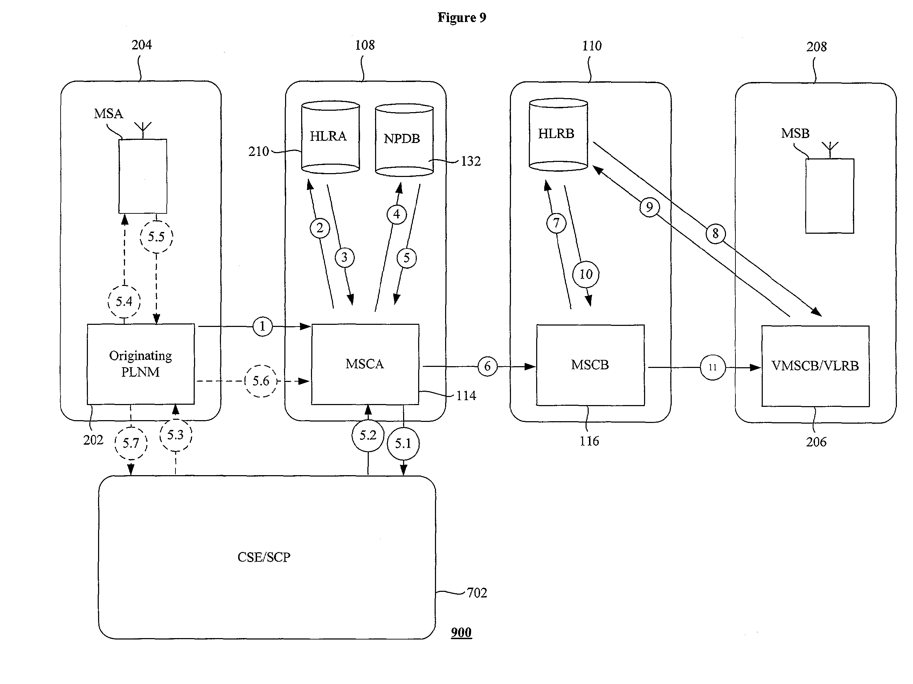

Referring to figure 9 there is shown an architecture 900 for a still further embodiment of the present invention. The architecture 900 is substantially similar to that shown in figure 8 and like reference numerals refer to like entities, which perform substantially identical or similar functions. Therefore, those functions and entities will not be described in detail for the sake of clarity and brevity. A significant difference between the architecture 800 shown in figure 8 and the architecture 900 shown in figure 9 is that the mobile station MSA is not informed that the called MSIDN has been ported to a known network since the CSE or SCP 702, in response to receiving the indication, at point 5.1, from the MSCA 114 that the called MSISDN has been ported to another network, automatically performs calculations to determine whether or not there are any adverse or unacceptable financial implications to the user of the calling mobile station MSA in allowing the call to proceed. In effect, the determination as to whether or not the call should be allow to proceed in the event of the called MSISDN having been ported to another network is performed automatically by the CSE or SCP 702 on behalf of the user (not shown) of the calling mobile station MSA. It will, therefore, be appreciated that the signalling or data exchanges that take place under point 5.3 to 5.7 in the architecture 800 shown in figure 8 only take place in the architecture 900 if the CSE or SCP 702 determines that there are adverse or unacceptable financial implications to the user of the calling mobile station MSA in allowing the call to the ported MSIDN to proceed. Upon determining that there are such adverse or unacceptable implications in allowing the call to the ported MSISDN to proceed, the signalling or data exchanges described above in relation to steps 5.3 to 5.7 are as applicable to the architecture 900 shown in figure 9 as they are to the architecture 800 shown in figure 8, which is why steps 5.3 to 5.7 have been shown in dashed form to indicate that they might not be performed depending upon the determinations made by the CSE or SCP 702.

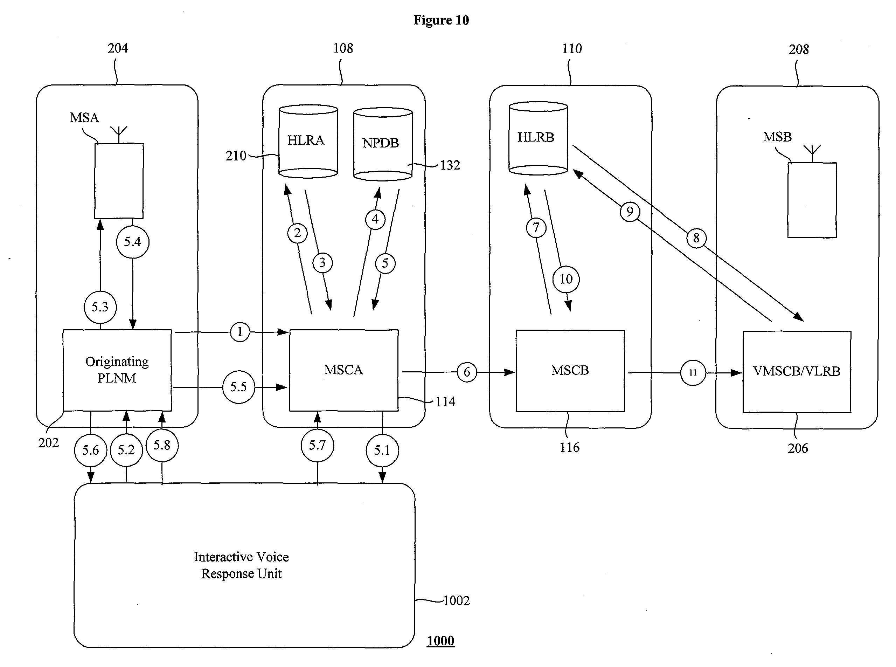

Referring to figure 10 there is shown an architecture 1000 of a still further embodiment of the present invention. The architecture 1000 shown in figure 10 has features in common with figures 8 and 9 and operates substantially as described in relation to figures 8 and 9. Therefore, for the sake of clarity and brevity, common features that operate in substantially the same or a substantially similar manner will not be described in detail again. It can be appreciated from figure 10 that the architecture 1000 additionally comprises an interactive voice response unit (IVR) 1002. The IVR 1002, in response to receiving an indication, at step 5.1, from the MSCA 114 that the called MSISDN has been ported to another network, generates, at step 5.2, a voice message to that effect for forwarding to the originating PLMN exchange 202 for ultimate output by the calling mobile station MSA.

Although the voice output has been shown or described in this embodiment as being forwarded from the IVR 1002 directly to the originating PLMN 202, embodiments are not limited to such an arrangement. Embodiments can be realised in which the output of the IVR 1002 is routed to the originating PLMN 202 via the MSCA 114.

The calling mobile st ation M SA, in response to receiving the voice data from the originating PLMN 202, at step 5.3, outputs the corresponding voice message to the subscriber (not shown) and solicits or seeks further instructions as to whether or not the call should be allowed to proceed. The subscriber's instructions are forwarded, at step 5.4, to the originating PLMN 202. Effect is given to those instructions either at step 5.5, where the MSCA 114 is instructed to allow the call to proceed, or at step 5.6, where the subscriber's instructions are forwarded for processing by the IVR 1002. The interactive voice response unit 1002 may use, for example, voice recognition or DTMF tone detection to determine whether or not the subscriber of the calling mobile station MSA wishes the call to the ported MSISDN to continue. If the IVR 1002 determines that the call should continue, an indication to t hat e ffect i s forwarded, a t st ep 5.7, to the MSCA 114 where call processing continues from point 6 as described above. However, if the IVR 1002 determines that the call to the ported MSISDN should not be allowed to continue, an indication to that effect is forwarded to at least one of the MSCA 114 and the originating PLMN 202 at steps 5.7 and 5.8 as the case may be and call processing is terminated.

It will be appreciated b y one skilled in the art that a n embodiment of t he p resent invention, which represents a combination of the architectures shown in figures 9 and 10, can be realised so that appropriate billing of the subscriber using the calling mobile station MSA can be performed in a user-friendly and automatic manner using the IVR 1002. In effect, such an embodiment combines the functions of the CSE or SCP with the IVR 1002.

The above embodiments have been described with reference to establishing a telephone call between two communication devices and, in particular, with reference to voice call-set up. However, it will be appreciated by one skilled in the art that other calls or communications such as, for example, EMS, MMS, SMS communications or data service communications can be accommodated

Although the above embodiments have b een d escribed w ith r eference to the M SC determining that the called MSISDN is a ported number, embodiments are not limited to such arrangements. Embodiments can be realised in which the MSC merely forwards data providing an indication that the number has been ported and the determination of whether or not the number has been ported can be undertaken by another network element or device such as, for example, the originating exchange, originating PSTN network element, an originating MSC or other mobile network element eg BSC or BTS, a SCP or CSE or any other network element.

The above embodiments have been described with reference to the MSISDN having been ported and action being taken accordingly. However, embodiments are not limited to detecting the MSISDN. Embodiments can be realised in which other identification data is used to determine w hether or not t he c all sh ould p roceed. F or e xample, t he International Mobile Equipment Identity data or the International Mobile Subscriber Identity data can be used to determine if a called number has been ported to another network, operator or service provider. It will be appreciated that the data contained within the NPDB could also be changed according to the type of number that is used to identify the ported number, associated device or subscriber.

Furthermore, it will be appreciated that the embodiments are applicable to fixed-line networks, and mobile communication networks such as, for example, GSM and CDMA2000 communication networks.

The reader's attention is directed to all papers and documents that are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, e ach feature disclosed is one e xample only of a g eneric se ries o equivalent or similar features.

The invention is not restricted to the details of any foregoing e mbodiments. The invention extends to any novel one, or any novel combination, of the features disclosed in this specification (including any accompanying claims, abstract and drawings), or to any novel one, or any novel combination, of the steps of any method or process so disclosed.

## Claims

1. A communication method comprising the steps of initiating a call to a first device, associated with a first communication network, operator or service provider, from a second device, associated with a second communication network, operator or service provider; determining that data associated with the first device has been ported to the first communication network from a different communication network; generating data, associated with the determining, to cause the second device to generate an output associated with the porting; and generating the output in response to receiving the generated data.

2. A communication method as claimed in claim 1 in which the step of generating the output in response to receiving the generated data comprises the step of generating at least one of an audible or visual output.

3. A communication method as claimed in claim 2 in which the step of generating the at least one of an audible or visual output comprises generating at least one of an associated tone pattern, output of data representing a voice message or output of data representing a visual message.

4. A communication method as claimed in any preceding claim further comprising the step of determining whether or not the porting of the data associated with the first device has an associated event and generating data associated with the event if the porting of the data has an associated event.

5. A communication method as claimed in any preceding claim in which the step of determining whether or not the porting of the data associated with the first device has an associated event comprises the step of determining whether or not the porting of the data comprises a change in a call tariff associated with the call to the first device.

6. A communication method as claimed in any preceding claim in which the step of determining whether or not the porting of the data comprises a change in call tariff associated with the call to the first device comprises the step of determining that the change in call tariff is acceptable to a subscriber associated with the second device.

7. A communication method as claimed in claim 6 in which the step of determining that the change in c all tariff is acceptable to the subscriber associated with the second device comprises the step of outputting data representing a message to indicate whether or not the change in call tariff is acceptable to the subscriber of the second device.

8. A communication method as claimed in claim 6 in which the step of determining that the change in c all t ariff is acceptable to the subscriber a ssociated w ith the second device comprises the step of performing a calculation or comparison to determine if the change in call tariff is acceptable or unacceptable to the subscriber.

9. A communication method associated with first and second communication devices; the method comprising the steps of initiating a call to the first communication device from the second communication device; detecting an event associated with a potential change in call tariff associated with the call; and outputting a message associated with detecting the event.

10. A mobile communication method comprising the steps of initiating a call to a first mobile device, associated with at least one of a first communication network, operator or service provider, from a second mobile device, associated with at least one of a second communication network, operator or service provider; determining that an MSISDN associated with the first device has been ported to the first communication network, operator or service provider; generating a message comprising data, associated with the determining, to cause the second device to generate an output associated with porting of the MSISDN; and generating the output in response to receiving the generated message.

11. A communication method comprising the steps of initiating a call from a first communication device to a second communication device; detecting a predeterminable, o change i n, c all t ariff a ssociated w ith t he call; and determining whether or not to continue with the call in response to the call-tariff.

12. A communication system comprising means to initiate a call from a first communication device to a second communication device; means to detect a predeterminable, or a change in, call tariff associated with the call; and means to determine whether or not the call should be allowed to proceed in response to the detected call tariff.

13. A communication method to initiate a communication between a first device and a second device; the method comprising the steps of receiving, from the second communication device, identification data associated with initiating the communication to the first communication device; detecting that the identification data associated with the first communication device is ported identification data; and determining whether or not the communication should proceed in response to said detecting.

14. A communication method as claimed in claim 13 in which the step of determining comprises the step of determining, in response to detecting that the identification data is ported identification data, that the communication has an associated call tariff.

15. A communication method as claimed in claim 14 further comprising the step of outputting data associated with the call tariff.

16. A communication method as claimed in claim 15 in which the step of outputting data associated with the call tariff comprises the step of outputting data representing at least one of a tone or tone sequence.

17. A communication method as claimed in claim 16 in which the step of outputting data associated with the call tariff c omprises the step of outputting data representing a voice message associated with the call tariff.

18. A communication method as claimed in any of claims 13 to 17 further comprising the step of outputting data representing a voice message associated with the ported identification data in response to detecting that the identification data is ported identification data.

19. A communication method as claimed in claim 18 in which the data representing the voice message comprises data representing an invitation to indicate whether or not the communication should proceed.

20. A communication method as claimed in any of claims 13 to 19 in which the step of determining whether or not the communication should proceed comprises the step of determining whether or not there are any adverse consequences in allowing the communication to proceed.

21. A communication method as claimed in claim 20 in which the step of determining whether there are any adverse consequences in allowing the communication to proceed comprises determining whether or not there are any adverse financial consequences in allowing the communication to proceed.

22. A communication method as claimed in any of claims 13 to 21 further comprising the step of allowing the communication to proceed in response to determining that the communication should be allowed to proceed.

23. A communication method as claimed in any of claims 13 to 22 further comprising the step of preventing the communication proceeding in response to determining that the communication should not be allowed to proceed.

24. A communication method as claimed in any preceding claim in which at least one of the first and second communication devices is a mobile telephone or wireless communication device or a fixed-line device.

25. A communication sy stem comprising means to implement a m ethod as claimed i n any preceding claim.

26. A network element comprising a communication system as claimed in claim 25.

27. An MSC, BSC, BTS, GMSC, SCP, CSE or IVR unit comprising a network element as claimed in claim 26.

28. A computer program comprising executable code to implement a system or method as claimed in any preceding claim.

29. A computer program product comprising storage storing a computer program as claimed in claim 28.
